# EUROPÄISCHE PATENTSCHRIFT

(11) **EP 0 590 594 B1**
(45) Veröffentlichungstag und Bekanntmachung des Hinweises auf die Patenterteilung: **26.06.1996**
(21) Anmeldenummer: 93115628.5
(22) Anmeldetag: 28.09.1993
(51) Int. Cl.: C23C 22/48, C23C 22/56, C09D 1/02

(54) **Behandlung von Metalloberflächen zur Verbesserung der Haftung und deren Korrosionseigenschaften**
Treatment of metallic surfaces to improve their adhesive force and their corrosion properties
Traitement de surfaces métalliques pour améliorer leur propriété adhésive et leurs propriétés anti-corrosion

(30) Priorität: 01.10.1992 CH 3070/92
(43) Veröffentlichungstag der Anmeldung: 06.04.1994
(73) Patentinhaber: ALUFINISH GmbH + Co. KG, D-56626 Andernach (DE)
(72) Erfinder: Böhme, Manfred, Dr., CH-9306 Freidorf (CH); Beck, Peter, D-8995 Sigmarszell (CH)
(74) Vertreter: Troesch Scheidegger Werner AG

(56) Entgegenhaltungen:
- WO-A-92/05297
- US-A- 4 828 616
- PATENT ABSTRACTS OF JAPAN, unexamined applications, C Sektion, Band 7, Nr. 175, 03. August 1983, The Patent Office Japanese Govt.; Seite 9 C 179

## Beschreibung

Die vorliegende Erfindung betrifft ein Verfahren zur Oberflächenbehandlung von Metalloberflächen zur Verbesserung der Haftung von auf diesen Oberflächen anzuordnenden Beschichtungen bzw. Überzügen, sowie zur Verbesserung von deren Korrosionseigenschaften sowie eine Anwendung des Verfahrens für die Oberflächenbehandlung von Aluminium und dessen Legierungen.

Um Metalloberflächen, insbesondere Oberflächen von Aluminium oder dessen Legierungen mit Lacken oder Pulverlacken beschichten zu können, werden diese Oberflächen vorbehandelt, um Korrosionsschutz zu erhalten, und um haftvermittelnde Eigenschaften für das anschliessende Beschichten zu erzeugen. (vgl. z.B. WO-A-9 205 297)

Bei den bisherigen Verfahren zur Behandlung von Metall-bzw. Aluminiumoberflächen ist es unumgänglich notwendig, die Oberflächen einer Konversionsbehandlung, wie beispielsweise einem Chromatieren, zu unterziehen, um den von den Anwendern gestellten Anforderungen an Korrosionsschutz und Haftung der Beschichtungsstoffe gerecht zu werden. Anstelle des Chromatierens ist auch das Behandeln mittels Titan- oder Zirkonium-haltigen Verbindungen möglich, wie beispielsweise im US Patent 5,089,064 beschrieben. Das Chromatieren beispielsweise geschieht in wässrigen Lösungen, die bis zu 10 g/ltr. Chromsäure und bis zu 5 g/ltr. Fluoride enthalten. Diese Stoffe sind bekanntermassen hochgradige Umweltgifte. Chromatierte Objekte müssen nach der Chromatierung zwangsläufig gespült werden. Dadurch werden grosse Mengen an Chromsäure und Fluoriden in das Wasser geschleppt. Die Eliminierung dieser Giftstoffe erfolgt durch ein aufwendiges Reduktions- und Ausfällverfahren mit anschliessender Filtration in einer Kammerfilterpresse. Trotz Automation der Abwasserbehandlungsanlagen kann auf Dauer ein Störfall bzw. Unfall sicher nicht ausgeschlossen werden. Solch ein Unfall kann für Umwelt und Betreiber der Anlage schwerwiegende Folgen nach sich ziehen.

Es ist daher eine Aufgabe der vorliegenden Erfindung, ein Oberflächenbehandlungsverfahren vorzuschlagen, welches auf die Verwendung der erwähnten Chromverbindungen verzichtet, und mittels welchem die Haftung von auf dieser Oberfläche anzuordnenden Beschichtungen bzw. Überzügen verbessert werden. Zweck der Erfindung ist es also, die für Mensch und Umwelt hochgiftigen Chromverbindungen aus dem abwasserintensiven Bereich von Oberflächenbehandlungsprozessen zu eliminieren.

Erfindungsgemäss wird diese Aufgabe mittels einem Verfahren zur Oberflächenbehandlung von Metalloberflächen nach dem Wortlaut von Anspruch 1 gelöst.

Der Effekt der vorliegenden Erfindung besteht in der Bildung einer Silikat- bzw. einer Magnesiumsilikatschicht, wie insbesondere einer Aluminiumsilikat- bzw. einer Aluminiummagnesiumsilikatschicht, wobei diese Schichten einen ausserordentlich guten Haftgrund für Lackierungen darstellen.

Diese Silikat- bzw. Magnesiumsilikatschichten werden dadurch erreicht, indem man die Metalloberfläche, insbesondere die Aluminiumoberfläche, einer alkalischen oder sauren Lösung von einem Metasilikat, wie einem Alkali- bzw. einem Kalium- oder Natriummetasilikat aussetzt. Dabei reagiert das Aluminium mit dem Metasilikation in Anwesenheit von Mineralisatoren unter Bildung einer Aluminium(Magnesium) Silikatschicht. Dies ist das Wesentliche der vorliegenden Erfindung. Dabei geschieht die Bildung dieser Silikatschicht sowohl mittels eines alkalischen Verfahrens, indem beispielsweise die wässrige Kalium- oder Natriummetasilikatlösung mit Kalium- oder Natriumhydroxyd versetzt wird, oder aber auch mittels eines sauren Verfahrens, indem die Lösung mit Mineralsäure versetzt wird.

Dabei wird vorzugsweise vorgeschlagen, bei der Verwendung von einer alkalischen Lösung die Metalloberfläche während 1-10 Min., vorzugsweise ca. 3 Min. in einem Arbeitstemperaturbereich von 20-80° C, vorzugsweise ca. 60° C der Natrimmetasilikatlösung auszusetzen, wobei diese die folgende Zusammensetzung aufweisen kann:
5-30 g Natriumhydroxyd/ltr. Lösung, vorzugsweise ca. 10 g/ltr. Lösung, und
2-20 g Natriummetalsilikat/ltr. Lösung, vorzugsweise ca. 8 g/ltr. Lösung.

Im Falle des sauren Verfahrens wird die Metalloberfläche vorzugsweise einer wässrigen Lösung von Natriummetasilikat während 1-10 Min., vorzugsweise ca. 5 Min. in einem Arbeitstemperaturbereich von 20-80° C, vorzugsweise ca. 60° C, ausgesetzt, wobei die Lösung die folgende Zusammensetzung aufweist:
20-100 g konzentrierte Salzsäure/ltr. Lösung, vorzugsweise ca. 40 g/ltr. Lösung, und
5-30 g Natriummetasilikat/ltr. Lösung, vorzugsweise 10 g/ltr. Lösung.

Vor der Durchführung der erfindungsgemäss definierten Oberflächenbehandlung wird die Metalloberfläche vorzugsweise mittels eines alkalischen Entfettungsmittels, wie beispielsweise Fettalkoholpolyglycoläther in wässrige Lösung gebracht, entfettet und gereïnigt. Je nach Verschmutzungsgrad der Metalloberfläche kann die gewählte Expositionszeit 3-10 Min. betragen, und der Arbeitstemperaturbereich liegt vorzugsweise zwischen ca. 25° C und 75° C.

Nach dieser Reinigungsstufe wird vorzugsweise die Oberfläche gebeizt, beispielsweise mittels einer wässrigen Lösung von Natriumhydroxyd und Natriumgluconat, wobei die Arbeitstemperatur beispielsweise zwischen 25° C und 75° C liegen kann.

Selbstverständlich ist es auch möglich, das Entfetten, Reinigen und Beizen der Metalloberfläche in einer einzigen Verfahrensstufe zusammenzufassen.

Im weiteren ist es selbstverständlich auch möglich, die Metalloberfläche mittels irgend welcher anderer bekannten Entfettungs- und Reinigungsverfahren zu reinigen, und auch das Beizen der so entfetteten und gereinigten Metalloberfläche kann mittels irgend eines in der Galvano- oder Lackierungstechnik bekannten Beizmittels erfolgen.

Nach Durchführung der oben definierten erfindungsgemässen Oberflächenbehandlung wird vorzugsweise die überschüssige Behandlungslösung abgespült, anschliessend mit vollentsalztem Wasser nachgespült und die Oberfläche mit stark verdünnter Salpetersäure neutralisiert. Daran anschliessend kann die Oberfläche erneut mit vollentsalztem Wasser gespült werden. Auch diese Nachbehandlung der erfindungsgemäss behandelten Oberfläche kann auf X-beliebige bekannte Art und Weise erfolgen.

Das oben erfindungsgemäss definierte Verfahren eignet sich insbesondere für die Oberflächenbehandlung von Aluminium oder dessen Legierungen.

Die Erfindung wird nun anschliessend anhand eines konkreten Beispieles näher erläutert.

### Beispiel: Oberflächenbehandlung von Aluminium

Um Aluminiumoberflächen anforderungsgemäss in bezug auf Lackhaftung und Korrosionsschutz unter erschwerten klimatischen Bedingungen (Schwitzwasserkonstantklima nach Din 50 017) vorbehandeln zu können, ist folgender Verfahrensablauf notwendig:
1. Entfetten und Reinigen: Die zu behandelnde Aluminiumoberfläche wird mittels eines alkalischen Entfettungsmittels, das in wässriger Lösung mit der Oberfläche des zu behandelnden Gegenstandes in Kontakt gebracht wird, entfettet und gereinigt. Diese wässrige Lösung enthält im vorliegenden Beispiel die folgenden Inhaltsstoffe:
   Fettalkoholpolyglykoläther 0,5 g/ltr.Lösung,
   Paraffinsulfonate 0,3 g/ltr. Lösung,
   Dodecylbenzolsulfonsäure-Natriumsalz 0,2 g/ltr. Lösung,
   Natriummetasilikat 20 g/ltr. Lösung,
   Natriumtripoyphosphat 10 g/ltr. Lösung,
   Natriumgluconat 5 g/ltr. Lösung, und
   Natriumcarbonat 15 g/ltr. Lösung.

   Je nach Verschmutzungsgrad wird eine Arbeitstemperatur im Bereich von 25-75° C gewählt. Die Expositionszeit beträgt in der Regel zwischen 3-10 Min.
2. Abspülen des überschüssigen Reinigungsmittels aus Punkt 1 mit Leitungswasser.
3. Beizen: Die Oberfläche wird mittels einer wässrigen Lösung, enthaltend
   Natriumhydroxyd 80 g/ltr. Lösung, und
   Natriumgluconat 20 g/ltr. Lösung,
   gebeizt. Die Arbeitstemperatur liegt bei ca. 50° C. Als Arbeitstemperatur kann aber irgend eine Temperatur im Bereich zwischen 25° C und 75° C gewählt werden.
4. Abspülen der überschüssigen Substanzen aus Punkt 3 mit Leitungswasser.
   Bei den Schritten 1-4 handelt es sich um vorbereitende Massnahmen, wobei derartige Massnahmen an sich aus dem Stand der Technik bekannt sind.
5. Erfindungsgemässes Oberflächenbehandlungsverfahren: Ausbilden der korrosionsverhindernden und haftvermittelnden Schicht mittels der erfindungsgemässen wässrigen Lösung:
   A) 5-30 g Natriumhydroxyd/ltr. Lösung, vorzugsweise 10 g/ltr. Lösung, und
      5-20 g Natriummetasilikat/ltr. Lösung, vorzugsweise 8 g/ltr. Lösung;
      oder
   B) 20-100 g Salzsäure 36%ig/ltr. Lösung, vorzugsweise 40 g/ltr. Lösung, und
      5-30 g Natriummetasilikat/ltr. Lösung, vorzugsweise 10 g/ltr. Lösung.

   Die Arbeitstemperatur liegt sowohl im Fall A wie auch im Fall B vorzugsweise bei 60° C. Die Expositionszeit beträgt im Fall der Lösung A vorzugsweise 3 Min. und bei der Verwendung von Lösung B ca. 5 Min.
6. Abspülen der überschüssigen Behandlungslösung aus Schritt 5.
7. Spülen mit vollentsalztem Wasser.
8. Neutralisieren der Oberfläche mit einer stark verdünnten Salpetersäure.
9. Spülen mit vollentsalztem Wasser.

### Variante:

Die Schritte unter Punkt 1-3 können in einer Beizentfettungslösung zusammengefasst werden, die üblicherweise die folgende Zusammensetzung umfasst:
Natriumhydroxyd 50 g/ltr. Lösung,
Natriumgluconat 20 g/ltr. Lösung,
Fettalkoholpolyglykoläther 1 g/ltr. Lösung,
Natriumcumolsulfonat 2 g/ltr. Lösung, und
Butylsulfonat 10 g/ltr. Lösung.

### Prüfung der Haftfestigkeit an pulverbeschichteten Aluminiumblechen:

Die Haftfestigkeit wurde an zwei pulverbeschichteten Aluminiumblechen überprüft, welche sowohl mit alkalisch als auch mit sauer erzeugter Silikatschicht gemäss dem erfindungsgemässen Verfahren versehen worden sind. Diese beiden Bleche wurden in einer 7-tägigen Lagerung in Kondenswasserkonstantklima nach DIN 50 017 durch einen Gitterschnitt und eine Kugelschlagprüfung auf Haftfestigkeit der Beschichtung überprüft.

Die Gitterschnittprüfung erfolgte nach DIN 53 151 "Gitterschnittprüfung von Anstrichen und ähnlichen Beschichtungen" mit einem Mehrschneidegerät B, wobei der Schneidenabstand 1 mm beträgt.

Das Ergebnis dieser Prüfungen ergab die folgenden Werte:

Im frisch beschichteten, nicht der Prüfung unterzogenen Zustand und nach 7 Tagen Belastung nach DIN 50 017 KK: Gt 0.

Im weiteren wurde eine Kugelschlagprüfung nach ASTM D 2794 bzw. DIN 55 669 "Verformungsprüfung an Beschichtungen durch Kugel schlag" durchgeführt. Die stossartige Belastung betrug 23,04 cm. kg (20 inch pounds).

Ergebnis: Im ursprünglichen Zustand und nach 7-tägiger Belastung nach DIN 50 017 KK: Keine Risse oder Ablösungen der Beschichtung von Blech wurden festgestellt.

Damit ist eindrücklich dargelegt, dass die Haftprüfungen den Anforderungen entsprechen und vergleichbar sind mit entsprechenden Aluminiumblechen, die mittels Chromatieren oberflächenbehandelt worden sind.

Bei den oben angeführten Beispielen handelt es sich selbstverständlich nur um Ausführungsvarianten, die geeignet sind, die vorliegende Erfindung näher zu erläutern. Selbstverständlich ist es möglich, sowohl Vorbehandlung, die eigentliche erfindungsgemässe Oberflächenbehandlung wie auch die Nachbehandlungen in X-beliebiger Art und Weise abzuändern bzw. zu modifizieren und den gegebenen Anforderungen anzupassen. Insbesondere hängen Vorbehandlung, Oberflächenbehandlung und Nachbehandlung auch von dem anschliessend anzuwendenden Beschichtungs- bzw. Lackierungsvorgang ab, bzw. von zu verwendendem Beschichtungs- bzw. Lackierungsmaterial. Im weiteren ist es möglich, anstelle der in den Beispielen verwendeten Natriumverbindungen andere Alkali-Metall-Verbindungen zu verwenden, wie beispielsweise Kalium-Verbindungen. Erfindungswesentlich ist, dass auf der Metalloberfläche, insbesondere der Aluminiumoberfläche ein Silikat bzw. Metasilikatüberzug erzeugt wird.

## Patentansprüche

1. Verfahren zur Oberflächenbehandlung von Metalloberflächen zur Verbesserung der Haftung von auf diesen Oberflächen anzuordnenden Beschichtungen bzw. Überzügen, sowie zur Verbesserung von deren Korrosionseigenschaften dadurch gekennzeichnet, dass die Oberfläche mit einer alkalischen oder sauren Lösung von Metasilikat behandelt wird.

2. Verfahren nach Anspruch 1, dadurch gekennzeichnet, dass auf der Metalloberfläche eine haftvermittelnde Silikat- bzw. Magnesiumsilikatschicht ausgebildet wird mittels einer wässrigen alkalischen Lösung von Alkalimetasilikat oder mittels einer wässrigen sauren Lösung von Alkalimetasilikat.

3. Verfahren nach einem der Ansprüche 1 oder 2, dadurch gekennzeichnet, dass als Alkalimetasilikat Natriummetasilikat oder Kaliummetasilikat verwendet wird.

4. Verfahren nach einem der Ansprüche 1 bis 3, dadurch gekennzeichnet, dass die Metalloberfläche einer wässrigen Lösung während 1-10 Min., vorzugsweise ca. 3 Min., in einem Arbeitstemperaturbereich von 20-80° C, vorzugsweise ca. 60° C, ausgesetzt wird, wobei die Lösung die folgende Zusammensetzung aufweist:
5-30 g Natriumhydroxyd/ltr. Lösung, vorzugsweise ca. 10g/ltr. Lösung, und
2-20 g Natriummetasilikat/ltr. Lösung, vorzugsweise ca. 8 g/ltr. Lösung.

5. Verfahren nach einem der Ansprüche 1 bis 3, dadurch gekennzeichnet, dass die Metalloberfläche einer wässrigen Lösung während 1-10 Min., vorzugsweise ca. 5 Min., in einem Arbeitstemperaturbereich von 20-80° C, vorzugsweise ca. 60° C, ausgesetzt wird, wobei die Lösung die folgende Zusammensetzung aufweist:
20-100 g konzentrierte Salzsäure/ltr. Lösung, vorzugsweise ca. 40 g/ltr., und
5-30 g Natriummetasilikat/ltr. Lösung, vorzugsweise ca. 10 g/ltr. Lösung.

6. Verfahren nach einem der Ansprüche 1 bis 5, dadurch gekennzeichnet, dass die Metalloberfläche vor der Oberflächenbehandlung mittels einem alkalischen Entfettungsmittel, wie beispielsweise Fettalkoholpolyglycoläther in wässrige Lösung gebracht, entfettet und gereinigt wird.

7. Verfahren nach einem der Ansprüche 1 bis 6, dadurch gekennzeichnet, dass die Oberfläche vor der Behandlung zunächst gereinigt und entfettet wird und anschliessend gebeizt wird, beispielsweise mittels einer wässrigen Lösung von Natriumhydroxyd und Natriumgluconat, wobei der Arbeitstemperaturbereich von 25° C bis 75° C beträgt.

8. Verfahren nach einem der Ansprüche 1 bis 7, dadurch gekennzeichnet, dass das Entfetten, Reinigen und Beizen der Metalloberfläche vor deren Oberflächenbehandlung in einem Verfahrensschritt zusammengefasst wird, in dem die Metalloberfläche einer wässrigen Lösung, enthaltend Natriumhydroxyd, Natriumgluconat und ein alkalisches Entfettungsmittel, während 3-10 Min. und in einem Temperaturbereich von 20-80° C ausgesetzt wird.

9. Verfahren nach einem der Ansprüche 1 bis 8, dadurch gekennzeichnet, dass nach der Oberflächenbehandlung überschüssige Behandlungslösung abgespült wird und anschliessend mit vollentsalztem Wasser nachgespült und die Oberfläche mit stark verdünnter Salpetersäure neutralisiert wird, worauf erneut mit vollentsalztem Wasser gespült wird.

10. Anwendung des Verfahrens nach einem der Ansprüche 1 bis 9, für die Oberflächenbehandlung von Aluminium oder Legierungen davon.

## Claims

1. Method of surface treatment of metal surfaces for improvement of the adhesion of coatings or overlays to be arranged on these surfaces as well as for improvement of their corrosion properties, characterised in that the surface is treated with an alkaline or acid solution of metasilicate.

2. Method as claimed in Claim 1, characterised in that an adhesion-promoting silicate or magnesium silicate layer is formed on the metal surface by means of an aqueous alkaline solution of alkali metasilicate or by means of an aqueous acid solution of alkali metasilicate.

3. Method as claimed in one of Claims 1 or 2, characterised in that sodium metasilicate or potassium metasilicate is used as alkali metasilicate.

4. Method as claimed in one of Claims 1 to 3, characterised in that the metal surface is exposed to an aqueous solution for 1 to 10 minutes, preferably approximately 3 minutes, in a working temperature range of 20 to 80°C, preferably approximately 60°C, wherein the solution has for example the following composition:
5 to 30 g sodium hydroxide/litre solution, preferably approximately 10 g/litre solution,
2 to 20 g sodium metasilicate/litre solution, preferably approximately 8 g/litre solution.

5. Method as claimed in one of Claims 1 to 3, characterised in that the metal surface is exposed to an aqueous solution for 1 to 10 minutes, preferably approximately 5 minutes, in a working temperature range of 20 to 80°C, preferably approximately 60°C, wherein the solution has for example the following composition:
20 to 100 g concentrated hydrochloric acid/litre solution, preferably approximately 40 g/litre solution,
5 to 30 g sodium metasilicate/litre solution, preferably approximately 10 g/litre solution.

6. Method as claimed in one of Claims 1 to 5, characterized in that before the surface treatment the metal surface is brought into an aqueous solution, degreased and cleaned by means of an alkaline degreasing agent, such as for example fatty alcohol polyglycol ether.

7. Method as claimed in one of Claims 1 to 6, characterised in that the before the treatment the surface is first of all cleaned and degreased and is then etched, for example by means of an aqueous solution of sodium hydroxide and sodium gluconate, the working temperature range being from 25°C to 75°C.

8. Method as claimed in one of Claims 1 to 7, characterised in that before the surface treatment of the metal surface the degreasing, cleaning and etching thereof is combined in one method step in which the metal surface is exposed to an aqueous solution containing sodium hydroxide, sodium gluconate and an alkaline degreasing agent for 3 to 10 minutes and in a temperature range from 20 to 80°C.

9. Method as claimed in one of Claims 1 to 8, characterised in that after the surface treatment excess treatment solution is rinsed off and then rinsed again with fully desalinated water and the surface is neutralised with highly diluted nitric acid, whereupon further rinsing with desalinated water is carried out.

10. Use of the method according to one of Claims 1 to 9 for the surface treatment of aluminium or alloys.

## Revendications

1. Procédé pour le traitement de surfaces métalliques pour améliorer l'adhérence de revêtements ou d'enduits à disposer sur ces surfaces et pour améliorer leurs propriétés anti-corrosion, caractérisé en ce que la surface est traitée avec une solution alcaline ou acide de métasilicate.

2. Procédé selon la revendication 1, caractérisé en ce qu'on forme sur la surface métallique une couche de passivation composée de silicate ou de silicate de magnésium à l'aide d'une solution alcaline aqueuse de métasilicate de métal alcalin ou à l'aide d'une solution acide aqueuse de métasilicate de métal alcalin.

3. Procédé selon l'une des revendications 1 et 2, caractérisé en ce qu'on utilise comme métasilicate de métal alcalin du métasilicate de sodium ou du métasilicate de potassium.

4. Procédé selon l'une des revendications 1 à 3, caractérisé en ce que la surface métallique est exposée à une solution aqueuse pendant 1 à 10 minutes, de préférence pendant environ 3 minutes, dans une plage de température de travail de 20 à 80°C, de préférence à environ 60°C, la solution présentant par exemple la composition suivante :
5 à 30 g d'hydroxyde de sodium /l de solution, de préférence environ 10 g/l de solution, et
2 à 20 g de métasilicate de sodium /l de solution, de préférence environ 8 g/l de solution.

5. Procédé selon l'une des revendications 1 à 3, caractérisé en ce que la surface métallique est exposée à une solution aqueuse pendant 1 à 10 minutes, de préférence pendant environ 5 minutes, dans une plage de température de travail de 20 à 80°C, de préférence à environ 60°C, la solution présentant la composition suivante :
20 à 100 g d'acide chlorhydrique concentré /l de solution, de préférence environ 40 g/l de solution, et
5 à 30 g de métasilicate de sodium /l de solution, de préférence environ 10 g/l de solution.

6. Procédé selon l'une des revendications 1 à 5, caractérisé en ce que la surface métallique, avant le traitement de surface, est dégraissée et nettoyée à l'aide d'un dégraissant alcalin en solution aqueuse comme par exemple de l'éther de polyglycol et d'alcool gras.

7. Procédé selon l'une des revendications 1 à 6, caractérisé en ce que la surface, avant le traitement, est tout d'abord nettoyée et dégraissée, puis décapée par exemple à l'aide d'une solution aqueuse d'hydroxyde de sodium et de gluconate de sodium, la plage de température de travail allant de 25°C à 75°C.

8. Procédé selon l'une des revendications 1 à 7, caractérisé en ce que le dégraissage, le nettoyage et le décapage de la surface métallique sont réunis avant le traitement de celle-ci en une phase du procédé pendant laquelle la surface métallique est exposée à une solution aqueuse contenant de l'hydroxyde de sodium, du gluconate de sodium et un dégraissant alcalin, pendant 3 à 10 minutes et dans une plage de température de 20 à 80°C.

9. Procédé selon l'une des revendications 1 à 8, caractérisé en ce que l'excédent de solution de traitement est rincé après le traitement de surface puis rincé ultérieurement avec de l'eau déminéralisée, et la surface est neutralisée avec de l'acide nitrique fortement dilué, et rincée une nouvelle fois avec de l'eau déminéralisée.

10. Utilisation du procédé selon l'une des revendications 1 à 9 pour le traitement de surfaces d'aluminium ou d'alliages d'aluminium.
